# EUROPÄISCHE PATENTANMELDUNG

(11) **EP 0 995 767 A2**
(43) Veröffentlichungstag der Anmeldung: **26.04.2000**
(21) Anmeldenummer: 99120402.5
(22) Anmeldetag: 13.10.1999
(51) Int. Cl.: C08G 59/50, C08G 59/18, C09D 163/00

(54) **Härtungsmittel für wässrige Epoxidharzdispersionen**

(30) Priorität: 19.10.1998 DE 19848113
(71) Anmelder: U. Prümmer Polymer-Chemie GmbH, 88487 Mietingen-Baltringen (DE)
(72) Erfinder: Hülskämper, Ludwig, Dr., 88448 Attenweiler (DE)
(74) Vertreter: Pfenning, Meinig & Partner GbR

(57) **Zusammenfassung**

Die Erfindung betrifft ein Härtungsmittel für wäßrige Epoxidharz-Dispersionen erhalten durch Umsetzung von 20-80 Gew.-% einer Additionsverbindung, hergestellt aus einer Polyepoxidverbindung und einem Polyakylenpolyetherpolyol mit 80-20 Gew.-% einer Aminverbindung, wobei die Additionsverbindung mit dem Polyamin umgesetzt und das überschüssige Amin entfernt und das entstehende Addukt isoliert wird.

## Beschreibung

Die Erfindung betrifft ein Härtungsmittel für wäßrige Epoxidharzdispersionen das durch Umsetzung einer Additionsverbindung hergestellt aus einer Polyepoxidverbindung und einem Polyol mit einer Aminverbindung erhalten wird. Die Erfindung betrifft weiterhin die Verwendung dieses Härtungsmittels zur Herstellung von aushärtbaren Dispersionen als Beschichtungs- oder Überzugsmittel.

Es ist bekannt, daß Polyamidoamine, die freie Aminogruppen enthalten und die aus Alkylenpolyaminen und polymerisierten ungesättigten natürlichen Fettsäuren hergestellt werden, zum Härten von Epoxidharzen verwendet werden können.

Die Härtung von Epoxidharzen mit Addukten die aus Polyamidoaminen und Polyepoxiden gebildet werden ist aus der EP 0 000 605 B1 bekannt. In diesen Dokument wird ein Härtungsmittel für wäßrige Epoxidharzdispersionen beschrieben, das durch Umsetzung von 20-80 Gew.-% eines Adduktes aus einer Polyepoxidverbindung und einem Polyalkylenpolyetherpolyol mit einer Aminverbindung gebildet worden ist. Kennzeichen des Härtungsmittels nach der EP 605 ist dabei, daß an die Aminverbindung, d.h. an das Polyamin zur Addition befähigte ungesättigte Verbindungen addiert werden.

Es hat sich jedoch gezeigt, daß die an die reaktiven Gruppen des Polyamins addierten ungesättigten Verbindungen, insbesondere bei höheren Temperaturen freigesetzt werden können, was dazu führt, daß die Applikation bei höheren Temperaturen stark eingeschränkt ist.

Es hat deshalb nicht an Versuchen gefehlt die Nachteile des vorstehend beschriebenen Härtungsmittel für wäßrige Epoxidharzdispersionen zu verbessern. Ein Weg ist in der EP 0 610 787 A2 beschrieben. Danach ist es vorgesehen, daß das Addukt aus dem Polyepoxid und dem Polyalkylenpolyetherpolyol mit einem sekundären Amin modifiziert wird.

Aber auch dieses Härtungsmittel ist in bezug auf seine toxikologischen Eigenschaften noch nicht befriedigend.

Ausgehend von der EP 605 ist es die Aufgabe der vorliegenden Erfindung eine verbessertes Härtungsmittel anzugeben, das zum einen toxikologisch unbedenklich ist und das über die gesamte Applikationsbreite ein einwandfreies Härtungssystem bildet.

Die Erfindung wird durch die kennzeichnenden Merkmale des Anspruches 1 gelöst. Die Unteransprüche zeigen vorteilhafte Weiterbildungen auf. Die Verwendung des Härtungsmittels ist in Patentanspruch 14 angegeben.

Erfindungsgemäß wird somit ein Härtungsmittel vorgeschlagen, das aus einer Additionsverbindung (A) besteht, wie sie bereits in der EP 605 beschrieben ist, wobei jedoch erfindungsgemäß vorgeschlagen wird, daß diese Additionsverbindung (A) mit einer Aminverbindung (B) umgesetzt wird, wobei das überschüssige Amin aus dem System entfernt und das entstehende Addukt (C) isoliert wird. Damit enthält das erfindungsgemäße Härtungsmittel kein flüchtiges freies Anm. Der Anwender vor Ort ist damit weder einer Geruchsbelästigung noch einer gesundheitlichen Gefährdung ausgesetzt. Es hat sich weiterhin überraschenderweise gezeigt, daß bei der Anwendung des Härtungsmittels nach zwei Stunden Topfzeit ein Anstieg der Viskosität erfolgt. Damit ist es möglich, das Ende der Verarbeitungszeit zu erkennen. Durch den Viskositätsanstieg ist es daher dem Verarbeiter nicht mehr möglich über die Verarbeitungszeit des Systems hinaus das Produkt zu applizieren. Diese Eigenschaften erhöht die Verarbeitungssicherheit des Produktes entscheidend.

Wie bereits vorstehend ausgeführt, wird das erfindungsgemäße Härtungsmittel durch Umsetzung einer Additionsverbindung (A) hergestellt aus einer Polyepoxidverbindung und einen Polyalkylenpolyetherpolyol mit einer Aminverbindung (B) erhalten. Wesentlich beim erfindungsgemäßen Härtungsmittel ist, daß die Aminverbindung (B) dabei so ausgewählt wird, daß ihr Siedepunkt 350 °C nicht überschreitet. Dadurch wird sichergestellt, daß nahezu alles flüchtiges freies Amin aus dem Addukt entfernt wird. Vorteilhaft beim erfindungsgemäßen Härtungsmittel ist es weiterhin, wenn die Aminverbindung über mindestens drei Aminogruppen verfügt. Beispiele für derartige Verbindungen, d.h. Verbindungen die einerseits über drei freie Aminogruppen verfügen und die andererseits einen Siedepunkt unter 350 °C aufweisen sind: Triethylentetramin (TETA), Tetraethylenpentamin (TEPA), Diethylentriamin, N,N'-Bis(3-Aminopropyl)-ethylendiamin (N₄-Amin).

Die Entfernung des flüchtigen Amins kann dabei mit allen aus den bisher aus dem Stand der Technik bekannten Verfahren durchgeführt werden. Vorteilhaft ist es jedoch, wenn das flüchtige Amin durch Destillation ggf. unter Vakuum entfernt wird. Bevorzugt muß dabei die Entfernung des Amins so gesteuert werden, daß höchstens 1 % Aminverbindung (B) im Addukt enthalten ist.

Zur Herstellung des Härtungsmittels ist es weiterhin bevorzugt, wenn das wie vorstehend beschriebene erhaltene isolierte Addukt das bevorzugter Weise über ein Molekulargewicht von 900 bis 1500 verfügen kann mit Wasser verdünnt wird, so daß eine 10-95 Gew.-%ige Lösung entsteht.

Bezüglich der Additionsverbindung (A) und die hierfür geeigneten Polyepoxidverbindungen und Polyalkylenpolyetherpolyole wird auf die EP 605 Bezug genommen. Im Rahmen des vorliegenden Härtungsmittel ist es jedoch besonders bevorzugt, Polyethylenetherglycole und/oder Polypropylenetherglycole als Polyalkylenpolyetherglycole einzusetzen. Bei den Polyepoxidverbindungen sind besonders Bisphenol-A- und/oder -F-Diglycidether bevorzugt.

Die Erfindung betrifft weiterhin die Verwendung des vorstehend beschriebenen Härtungsmitteln. Es hat sich gezeigt, daß das erfindungsgemäße Härtungsmittel zusammen mit polyfunktionellen Epoxidverbindungen und Wasser zur Herstellung von aushärtbaren Dispersionen bis zu 90, vorzugsweise bis zu 50 Gew.-% Wassergehalt als Beschichtungs- oder Überzugsmittel eingesetzt werden kann. Ganz besonders ist hierbei hervorzuheben, daß ein sichtbares Ende "der Bearbeitungszeit" wie eingangs erläutert, vorliegt. Dadurch wird die Verarbeitungssicherheit, insbesondere auch noch im Zusammenhang mit der toxikologischen Unbedenklichkeit deutlich erhöht. Es ist dabei festzustellen, daß es auch für einen Fachmann ausgehend von der EP 605 nicht vorhersehbar war, daß diese speziellen isolierten Aminaddukte derart überlegene Eigenschaften aufweisen.

Die Erfindung wird nachstehend anhand von mehreren Ausführungsbeispielen erläutert.

### Beispiel 1A

300 g Polypropylenglycol, mittlere Molmasse 1200, 334 g Bisphenol-F-Diglycidether mit einem Epoxiäquivalentgewicht (EEW) von 170 und 1,0 g BF₃-Benzylamin-Komplex (z.B. Fa. Heyl, Berlin) werden in einem 1l Dreihalskolben, der mit einen Thermometer und Rührer versehen ist, eingewogen. Es wird auf 170 °C aufgeheizt und diese Temperatur gehalten bis der theoretische EEW-Wert von 423 erreicht ist.
- Gefundener EEW-Wert:: 440
- Viskosität (25 °C):: 7,8 Pa·s

### Beispiel 1B

In einem 1l Kolben mit Thermometer und Rührer werden 190 g (1,2 mol) Triethylentetramin (TETA) vorgelegt und auf 80 °C erwärmt. Unter gutem Rühren werden 264 g (0,3 mol) nach der Epoxiverbindung 1A langsam zugegeben. Nach vollständiger Zugabe wird bei dieser Temperatur 30 Min. nachgerührt, das Vakuum einer Wasserstrahlpumpe angelegt und das überschüssige TETA vollständig abdestilliert (Siedepunkt ca. 140 °C). Es wurden 109 g Destillat erhalten. Nach dem Abkühlen auf 80 °C werden 148 g Wasser zugegeben, homogenisiert und so eine 70 %ige wäßrige Lösung erhalten.
- Viskosität (25 °C):: 22,1 Pa·s
- Aminzahl:: 225 mg KOH/g
- H-Äquivalentgewicht:: 194

### Beispiel 1C

Wie unter 1B beschrieben, werden 124 g (1,2 mol) Diethylentriamin (DETA) vorgelegt, auf 80 °C erwärmt und 264 g (0,3 mol) der Epoxiverbindung 1A langsam zugegeben, und anschließend das überschüssige DETA abdestilliert. (Siedepunkt ca. 90 °C bei 13 mbar). Es wurden 73,4 g Destillat erhalten. Nach dem Abfüllen wurden 135 g Wasser zur Herstellung einer 70 %igen Lösung zugegeben.
- Viskosität (25 °C):: 12,4 Pa·s
- Aminzahl:: 188 mg KOH/g
- H-Äquivalentgewicht:: 230

### Beispiel 2A

Es wurden 180 g Polypropylenglycol, mittlere Molmasse 1200, 60 g Polyethylenglycol, mittlere Molmasse 1000, 280,6 g Bisphenol F-Diglycidether mit einem EEW-Wert von 170 und 0,88 g BF₃ Benzylamin-Komplex wie unter Beispiel 1A beschrieben, umgesetzt.

Das Produkt hatte folgende Kenndaten:
- Viskosität (25 °C):: 6,7 Pa·s
- EEW-Wert:: 415

### Beispiel 2B

249 g (0,3 mol) dieses Produktes 2A wurden mit 190 g (1,2 mol) TETA, wie unter Beispiel 1B beschrieben, umgesetzt, das überschüssige TETA abdestilliert (Destillatmenge: 123 g) und 140 g Wasser zugesetzt.
- Viskosität (25 °C):: 19,3 Pa·s
- Aminzahl:: 251 mg KOH/g
- H-Äquivalentgewicht:: 191

### Beispiel 2C

Wie unter 1B beschrieben, werden 249 g (0,3 mol) DETA vorgelegt, auf 80 °C erwärmt und 264 g (0,3 mol) der Epoxiverbindung 2A langsam zugegeben und anschließend das überschüssige DETA abdestilliert. Es wurden 73 g Destillat erhalten. Nach dem Abkühlen werden 128 g Wasser zur Herstellung einer 70 %igen Lösung zugegeben.
- Viskosiät (25 °V):: 17,4 Pa·s
- Aminzahl:: 204 mg KOH/g
- H-Äquivalentgewicht:: 219

### Beispiel 2D

In einem 500 ml Kolben mit Thermometer und Rührer werden 263 g (150 mmol) des isolierten Aminadduktes 2C vorgelegt und auf 70 °C erwärmt.
Es werden 3,0 (37,5 mmol) 38 %ige Formaldehyd-Lösung tropfenweise zugegeben, und anschließend 21,75 g (75 mmol) C₁₂₋₁₄ Fettalkoholglycidether. Es wird 1 Stunde nachgerührt und mit 123,4 g Wasser eine 50 %ige Lösung eingestellt.
- Viskosität (25 °C):: 4,8 Pa·s
- Aminzahl:: 129 mg KOH/g
- H-Äquivalentgewicht:: 381

### Anwendungstechnische Prüfungen

Zur anwendungstechnischen Prüfung der erfindungsgemäßen Härtungsmittel wird mit Epoxydharzen eine Dispersion wie folgt hergestellt:

0,1 H-Äquivalente (in Gramm) des Härters werden eingewogen und mit Wasser so verdünnt, daß eine Viskosität von 2-4 Pa·s entsteht. Dann werden 0,6 g Essigsäure zugegeben und gut vermischt. Anschließend werden 0,1 Epoxyäquivalente (in Gramm) ein mit C₁₂₋₁₄ Glycidether reaktivverdünnter Bisphenol A/F-Harz (z.B. POLYPOX E 403) zugegeben und intensiv gerührt. Dabei entsteht eine Dispersion, die anschließend mit Wasser so verdünnt wird, daß ein Glasplattenaufzug (200 µm) mit einem Spaltrakel problemsol möglich ist.

In Tabelle 1 sind die Ergebnisse zusammengestellt.

**Tabelle 1**

| *Dispersion mit reaktivverdünntem Bisphenol -A/F-Epoxydharz* | | | | | |
|---|---|---|---|---|---|
| | 1B | 1C | 2B | 2C | 2D |
| Topfzeit | 1h 30 | 1h 30 | 2h 15 | 2h 15 | 2h |

| Vorreaktionszeit 15 Min. | | | | | |
|---|---|---|---|---|---|
| - Filmbildung | einwandfrei | einwandfrei | einwandfrei | nicht in Ordnung mattes Aussehen | einwandfrei |

| - Pendelhärte (nach König) | | | | | |
|---|---|---|---|---|---|
| 24h | 36 sec | 56 sec | 36 sec | | 28 sec |
| 3 Tage | 56 sec | 71 sec | 67 sec | | 63 sec |
| 7 Tage | 77 sec | 88 sec | 91 sec | | 80 sec |

| Vorreaktionszeit 60 Min. | | | | | |
|---|---|---|---|---|---|
| - Filmbildung | einwandfrei | einwandfrei | einwandfrei | einwandfrei | einwandfrei |

| - Pendelhärte | | | | | |
|---|---|---|---|---|---|
| 24h | 29 sec | 34 sec | 35 sec | 42 sec | 32 sec |
| 3 Tage | 49 sec | 40 sec | 67 sec | 74 sec | 63 sec |
| 7 Tage | 70 sec | 48 sec | 97 sec | 99 sec | 77 sec |

## Patentansprüche

1. Härtungsmittel für wäßrige Epoxidharz-Dispersionen erhalten durch Umsetzung von 20-80 Gew.-% einer Additionsverbindung (A) hergestellt aus einer Polyepoxidverbindung und einem Polyalkylenpolyetherpolyol mit 80-20 Gew.-% einer Aminverbindung (B),
**dadurch gekennzeichnet,**
daß die Additionsverbindung (A) mit einem Polyamin (B) ausgewählt aus aliphatischen, cycloaliphatischen, araliphatischen, heterocyclischen Polyaminen oder Mischungen hiervon bei Raumtemperaturen bis 150 °C umgesetzt und das überschüssige Amin (B) entfernt und das entstehende Addukt (C) isoliert wird.

2. Härtungsmittel nach Anspruch 1, dadurch gekennzeichnet, daß das Addukt (C) mit Wasser verdünnt wird, so daß eine 10-95 Gew.-%ige Lösung entsteht.

3. Härtungsmittel nach Anspruch 1 oder 2, dadurch gekennzeichnet, daß die Aminverbindung (B) so ausgewählt ist, daß ihr Siedepunkt 350 °C nicht überschreitet.

4. Härtungsmittel nach Anspruch 3, dadurch gekennzeichnet, daß die Aminverbindung (B) mindestens drei Aminogruppen aufweist.

5. Härtungsmittel nach mindestens einem der Ansprüche 1 bis 4, dadurch gekennzeichnet, daß die Aminverbindung (B) ausgewählt ist aus Triethylentetramin, Tetraethylenpentamin, Diethylentriamin, N,N'-Bis(3 Aminopropyl)-ethylendiamin.

6. Härtungsmittel nach mindestens einem der Ansprüche 1 bis 5, dadurch gekennzeichnet, daß die Entfernung des Adduktes (C) so geführt wird, daß höchstens 1 % Aminverbindung (B) im Addukt (C) enthalten ist.

7. Härtungsmittel nach mindestens einem der Ansprüche 1 bis 6, dadurch gekennzeichnet, daß das Addukt (C) abdestilliert wird.

8. Härtungsmittels nach mindestens einem der Ansprüche 1 bis 7, dadurch gekennzeichnet, daß das Molekulargewicht des Adduktes (C) im Bereich von 900-1400 liegt.

9. Härtungsmittel nach mindestens einen der Ansprüche 1 bis 8, dadurch gekennzeichnet, daß das mittlere Molekulargewicht des Polyalkylenpolyetherpolyols im Bereich von 200-10000 liegt.

10. Härtungsmittel nach mindestens einem der Ansprüche 1 bis 9, dadurch gekennzeichnet, daß das Äquivalentverhältnis von Polyepoxid zu Polyalkylenpolyetherpolyol im Bereich von 2 : 0,1-1,5 liegt.

11. Härtungsmittel nach mindestens einem der Ansprüche 1 bis 10, dadurch gekennzeichnet, daß das Polyalkylenpolyetherpolyol ausgewählt ist aus Polyethylenetherglycole und/oder Polypropylenetherglycole.

12. Härtungsmittel nach mindestens einen der Ansprüche 1 bis 11, dadurch gekennzeichnet, daß das Polyepoxid ausgewählt ist aus Bisphenol-A- und/- oder F-Diglycidether.

13. Härtungsmittel nach mindestens einem der Ansprüche 1 bis 12, dadurch gekennzeichnet, daß die Additionaverbindung (A) in Gegenwart eines BF-Aminkomplexes als Katalysator hergestellt wird.

14. Verwendung des Härtungsmittels hergestellt nach mindestens einem der Ansprüche 1 bis 13, dadurch gekennzeichnet, daß es zusammen mit polyfunktionellen Epoxidverbindungen und Wasser zur Herstellung von aushärtbaren Dispersionen mit bis zu 90, vorzugsweise bis zu 50 Gew.-% Wassergehalt als Beschichtungs- oder überzugsmittel eingesetzt wird.
